# EUROPÄISCHE PATENTANMELDUNG

(11) **EP 2 314 777 A2**
(43) Veröffentlichungstag der Anmeldung: **27.04.2011**
(21) Anmeldenummer: 10013614.2
(22) Anmeldetag: 13.10.2010
(51) Int. Cl.: E03F 5/04

(54) **Straßeneinlauf mit Filter**

(30) Priorität: 19.10.2009 DE 102009049682
(71) Anmelder: Schladitz, Bernd, 51702 Bergneustadt (DE)
(72) Erfinder: Schladitz, Bernd, 51702 Bergneustadt (DE)
(74) Vertreter: Schmidt, Karl Michael

(57) **Zusammenfassung**

Die Erfindung betrifft einen Straßeneinlauf mit einem Filter. Der Straßeneinlauf hat eine obere Einlaßkammer (5) und eine damit verbundene untere Auslaßkammer. Um hierbei die Trennung nicht nur von Leichtflüssigkeiten, sondern auch von feinsten Partikeln, oder anderen Substanzen, wie Tensiden zu ermöglichen ist erfindungsgemäß vorgeschlagen, dass die Auslaßkammer in mehrere vertikal geteilte Unterkammern (7,10,11,12) geteilt, von welchen zwei Kammern (11,12) über eine Trennwand geteilt als erste und zweite Absetzkammer dienen, und die Trennwand mit einem Aktivkohle oder Filtergranulat/-Substrat oder bioaktiviertem Trägermaterial gefüllten Filterkorb versehen ist, oder eine der Absetz- oder Unterkammern insgesamt mit einem bioaktivierten oder filterfähigen Trägermaterial gefüllt ist.

## Beschreibung

Die Erfindung betrifft einen Straßeneinlauf (Gully oder Sinkkasten) mit einer oberen Einlaßkammer und einer davon über einen Einlaßkammerboden getrennten unteren Auslaßkammer, wobei die Auslaßöffnung der Einlaßkammer durch ein Rohr oder ein Siphon deutlich oberhalb des Einlaßkammerbodens liegt, sowie eine mit einem Schwimmkörper verschließbare Auslaßleitung in der Auslaßkammer, gemäß Oberbegriff des Patentanspruches 1.

Aus der DE 36 20 182 A1 ist ein sogenannter Straßeneinlauf bekannt, bei welchem eine obere Einlaßkammer und eine untere Auslaßkammer vorgesehen ist. In die obere Kammer ragt ein Stutzen hinein, so dass ein Ablauf nach unten erst erreicht wird, wenn die obere Einlaßkammer soweit gefüllt ist, dass der Wasserspiegel diesen Stutzen übersteigt.

Ferner ist bekannt, im unteren Bereich, d.h. im Ablauf der Auslaßkammer Mittel vorzusehen, die mit einem Schwimmer ein Ventil bilden, welches dann schließt wenn Leichtflüssigkeit im Straßeneinlauf vorliegt. Damit wird verhindert, dass Leichtflüssigkeit in die Abwasserkanalisation gerät.

Bereits in der oberen Einlaßkammer setzen sich Partikel ab. Aber auch unten am Boden der Auslaßkammer und/oder deren Teilkammern setzen sich Partikel nach einer Zeit als Schlamm ab. Dieser soll ebenso zurückgehalten werden, damit er nicht ins Abwassernetz gelangt.

Der Erfindung liegt daher die Aufgabe zugrunde einen Straßeneinlauf zu schaffen, bei welchem die Trennung nicht nur von Leichtflüssigkeiten, sondern auch von feinsten Partikeln abfilterbare Stoffe, oder anderen Substanzen, wie Tensiden möglich ist

Die gestellte Aufgabe ist bei einem Straßeneinlauf der gattungsgemäßen Art erfindungsgemäß durch die kennzeichnenden Merkmale des Anspruches 1 gelöst.

Weitere vorteilhafte Ausgestaltungen sind in den übrigen abhängigen Ansprüchen angegeben.

Kern der Erfindung ist, dass die Auslaßkammer in mehrere vertikal geteilte Unterkammern geteilt ist, von welchen zwei Kammern über eine Trennwand geteilt als erste und zweite Absetzkammer dienen, und die Trennwand mit einem Aktivkohle oder Filtergranulat oder -substrat oder bioaktiviertem Trägermaterial gefüllten Filterkorb versehen ist, oder eine der Absetz- oder Unterkammern insgesamt mit einem bioaktivierten oder filterfähigen Trägermaterial gefüllt ist.

Bioaktiviertes Trägermaterial bedeutet hierbei, dass es sich um Partikel, Schwämme oder Granulate oder Substrate handelt, die mit Mikroorganismen beschichtet sind, welche in der Lage sind, bestimmte in Wasser gelöste Stoffe zu entschaden.

Dies ist dann eine Form von biologisch aktivem Filter.

Auf diese Weise passiert das einlaufende Wasser zwangsweise diese besondere Filterstufe und ermöglicht so die Trennung nicht nur von Leichtflüssigkeiten, sondern auch das Abfiltern von anderen abwasserbedenklichen ggfs sogar gelösten Stoffen.

In weiterer vorteilhafter Ausgestaltung ist vorgesehen, dass die Trennwände zwischen den Unterkammern jeweils einer flüssigkeitsdurchlässigen Schlitzung versehen sind, und dass dort, wo der Filterkorb angeordnet ist, die Schlitzung durch den flüssigkeitsdurchgängigen Filterkorb ersetzt ist. So ist ein effektiver Feinfilter vorgesehen.

In vorteilhafter Ausgestaltung ist vorgesehen, dass in mindestens eine der Unterkammern ein nahezu raumfüllender entnehmbarer Filterkorb vorgesehen ist, in welchem das Filtermaterial angeordnet ist. Dies Alternative gibt die Möglichkeit sofort ein gesamte Absetzkammer als Filterkammer vorzusehen, und mit der Entnehmbarkeit des Filterkorbes ist das Filtermaterial von oben einfach wechselbar.

Eine weitere vorteilhafte Ausgestaltung besteht darin, dass die Trennwand mit dem integrierten Filterkorb von oben entnehmbar ist, zwecks Wechsel des Filtermaterials. Für diese Lösung gilt im Hinblick auf die Einfachheit des Wechsels des Filtermaterials dasselbe.

In weiterer vorteilhafter Ausgestaltung ist vorgesehen, dass die Schlitzung als integrierter Grobfilter strukturiert ist.

In letzter vorteilhafter Ausgestaltung ist vorgesehen, dass die Absetzkammern bodenseitig mit einer Gitter- oder Wabenstruktur als Schlammfangtaschen ausgebildet sind, und diese mit bioaktiviertem Trägermaterial gefüllt sind. So kommt es bodenseitg durch die Wabenstruktur nicht nur zu einer Strömungsberuhigung, sondern durch das bioaktivierte Material wird der abgesetzte Schlamm in gewisser Weise entschadet.

In weiterer vorteilhafter Ausgestaltung ist angegeben, dass zwischen Beruhigungskammer und Ventilkammer ein Überlaufrohr angeordnet ist. Dies soll im Fall eines überstarken Wasseranfalls den Straßeneinlauf so schnell wie möglich entleeren. Im Fall einer drohenden Überschwemmung hat die schnellstmögliche Entwässerung der Straße Priorität gegenüber einer Filterung des Wassers.

In diesbezüglicher vorteilhafter Ausgestaltung ist angegeben, dass das Überlaufrohr als U-förmig verlaufendes Rohr ausgebildet ist und so auf dem Trennboden angeordnet ist, dass eine Öffnung des Überlaufrohres in die Beruhigungskammer und die andere Öffnung in die Ventilkammer jeweils von oben einmündet. Damit kann das Rohr baulich mit in den Straßeneinlauf, bzw das Gehäuse intergiert angeordnet sein.

In weiterer vorteilhafter Ausgestaltung kann auch zusätzlich oder ersatzweise ein Überlaufrohr (21) zwischen Einlaßkammer und Ventilkammer angeordnet sein. In vorteilhafter Ausgestaltung sind die Überlaufrohre unverschlossene Rohre. D.h. sie haben keine Deckel oder Ventildeckel. Sie sind in der Regel offen, und so platziert dass sie nur im Überlastfall aktiv sind.

Je nach Einsatz kann das Rohr auch mit einem Stopfen verschlossen werden.

In weiterer vorteilhafter Ausgestaltung ist vorgesehen, dass der Straßeneinlauf am Gehäuse außen mit angeformeten Ringelementen versehen ist, um einem Auftrieb in Wasser entgegen zu wirken.

In weiterer vorteilhafter Ausgestaltung ist vorgesehen, dass am oberen Rand des Gehäuses eine Materialverdickung angeformt ist, als sogenanntes Opfermaterial für die Einfassung des Straßeneinlaufes in flüssigen heissen Straßenteer.

Die Erfindung ist in einem Ausgestaltungsbeispiel in der Zeichnung dargestellt und nachfolgend näher beschrieben.

Es zeigt:
Figur 1: Seiten- und Teildraufsicht auf Straßeneinlauf
Figur 2: Perspektivische Darstellung eines Ausschnittes des Straßeneinlaufes.
Figur 3: 1. Überlaufrohr
Figur 4: 2. Überlaufrohr
Figur 5: Materialanformungen am Gehäuse des Straßeneinlaufes.

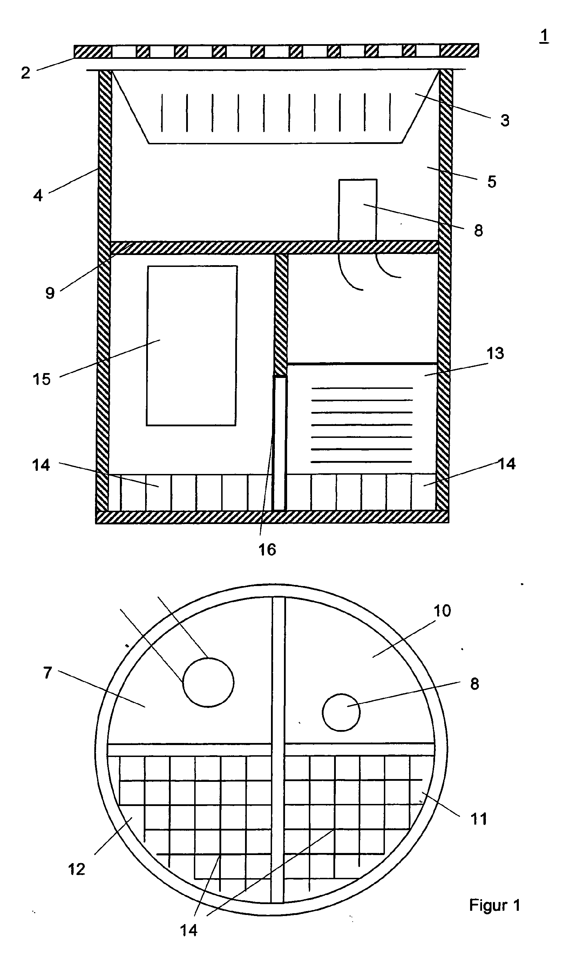

Figur 1 zeigt im oberen Bildteil eine Seitenschnittdarstellung durch den Bodeneinlauf, bei welchem derselbe bekanntermaßen oben mit einem Abdeckgitter oder Gitterrost 2 abgedeckt ist. Unterhalb des Abdeckgitters 2 besteht der Straßeneinlauf aus einem tonnenförmigen Gehäuse 4, in welchem alle notwendigen technischen Details angeordnet sind. Unter dem Abdeckgitter 2 ist ein entnehmbares körbförmiges Laubfangsieb 3 oder eine Art Eimer angeordnet. Darunter ist das Behältnis des Straßeneinlaufes 1 in mehrere Kammern unterteilt. Im wesentlichen ist eine obere Kammer als Einlaßkammer 5 direkt unter dem Laubfangsieb 3 angeordnet. Die Einlaßkammer 5 ist über einen Trennboden 9 von der unteren Kammer getrennt.

Die untere Kammer ist widerum unterteilt in 4 Teilkammern, die über Trennwände mit Durchgangsöffnungen, Sieben und Durchlassschlitzen versehen sind.

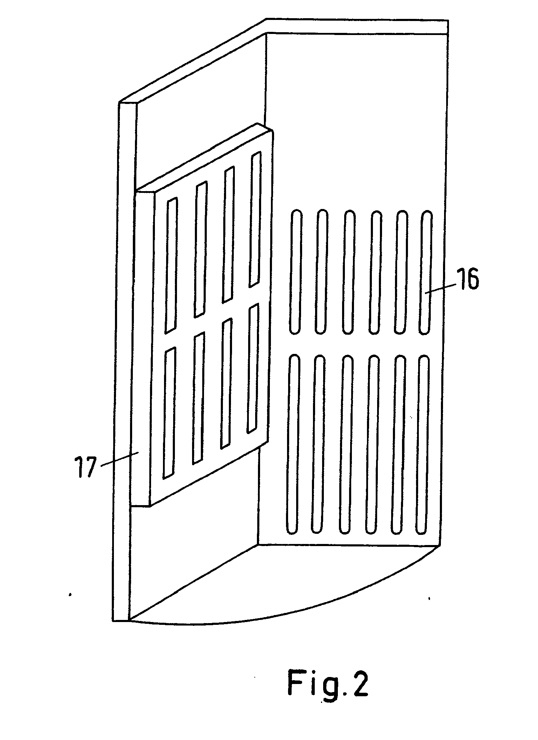

Wenn man den unteren Bildteil von Figur 1 betrachtet, so ist dargestellt, dass das Siphon zum letztendlichen Ablauf nach draussen in der Ventilkammer ist. Der Einlauf erfolgt dann von oben, d.h. von der Einlaßkammer aus in die darunter liegende erste Teilkammer. Die entsprechende Wasserführung bzw das dafür notwendige Rohr 8 ist nachfolgend noch in Figur 2 dargestellt. Von dort gelangt das Schmutzwasser zunächst in eine der ersten unteren Teilkammern, nämlich in die Beruhigungskammer 10.

Von dort soll das Schmutzwasser durch eine sogenannte Schwallwand 13 beim Weiterströmen in die zweite Teilkammer, nämlich die erste Absetzkammer 11 beruhigt werden. Die Schwallwand 13 ist dabei eine halbhohe mit Längs- oder Querschlitzen versehene Wand, die auch als Grobschmutzrechen dient. Diese soll das Schmutzwasser beim Weiterströmen weiter beruhigen. Das Schmutzwasser tritt sodann beruhigter in die zweite Teilkammer ein.

Die zweite Teilkammer, d.h. die erste Absetzkammer 11 ist dabei bodenseitig mit einer Gitter- oder Wabenstruktur 14 versehen. Diese wirken als sogenannte Schlammfangtaschen, in denen sich absetzender Schlamm gänzlich bewegungsberuhigt. Das über die Schlammfangtaschen weiterströmende Wasser bewirkt keine Verwirbelung des abgesetzten Schlamms mehr.

Von der zweiten Teilkammer, d.h der ersten Absetzkammer 11 strömt das Wasser sodann durch eine weitere wandung in welchem ein Grobsieb 16 (Maschenweite über 1,0 millimeter) eingebracht ist, in die dritte Teilkammer, die die zweite Absetzkammer 12 ist. Das Grobsieb erstreckt sich dabei vom Boden bis etwa in halbe Kammerhöhe. Diese Teilkammer enthält ebenfalls bodenseitig Schlammfangtaschen 14.

Dort beruhigt sich das Wasser dann gänzlich. Über eine Durchtrittsöffnung, deren Unterkante erst in etwa einem Drittel der Kammerhöhe liegt, und in welcher ein Feinsieb 15 (Maschenweite 0,2 bis 1,0 millimeter)oder Aktivkohle, oder Substratfilter angeordnet ist strömt dann das Wasser in die Ventilkammer 7. Vorzugsweise ist die Maschenweite des Feinsiebs 15 oder Feinfilters zwischen 0,2 und 1,0 millimeter.

Das Wasser, welches auch Leichtflüssigkeiten, wie Öle, Fette, Benzin etc mitführen kann, strömt nun in diese als Ventilkammer 7 bezeichnete vierte Teilkammer um. Die Dichte des Schwimmers ist kleiner 1, d.h. bei etwa 0,7.

Wenn Leichtflüssigkeiten wie Öle Fette vorliegen, sinkt der Schwimmer ab und verschließt den Ventilsitz.

Wenn Wasser ohne Leichtflüssigkeit vorliegt, dann hebt sich der Schwimmer und das Wasser kann nach Extern in die Kanalisation ablaufen.

Figur 2 zeigt in perspektivischer Ansicht das Filterelement oder den Filterkorb, der in der Trennwand zwischen den Absetzkammern 11 und 12 integriert ist.

Als Feinfilter 15 gemäß Figur 1 dient ein Filterkorb 17, gemäß Figur 2, welcher mit Aktivkohle-Granulat oder -Substrat und/oder mit bioaktiviertem beschichtetem Trägermaterial gefüllt ist.

Alternativ dazu kann auch die gesamte 2. Absetzkammer 12 mit Aktivkohle oder bioaktiviertem Trägermaterial gefüllt sein, oder dort ein entsprechender Filterkorb eingeführt sein. Dieser kann zum Wechsel des Filtermaterials entnehmbar sein, indem zuerst das Abdeckgitter 2 oder Gitterrost und dann der Trennboden abgehoben werden. Unter bioaktiviertem Trägermaterial versteht man Granulate und Substrate, die mit einer biologisch/mikrobisch aktivierten Oberflächenbeschichtung versehen sind. Damit ist es letzendlich möglich, nicht nur Partikel bzw abfilterbare Stoffe zu filtern, sondern auch im Wasser gelöste Schadstoffe zu filtern.

Figur 2 zeigt die Grobfilterposition also wie schon oben in Figur 1 dargestellt. Der Feinfilter 17 ist als gefüllter Filterkorb 17 in die wandöffnung von der zweiten Absetzkammer 12 hin zur Ventilkammer 7 eingesetzt.

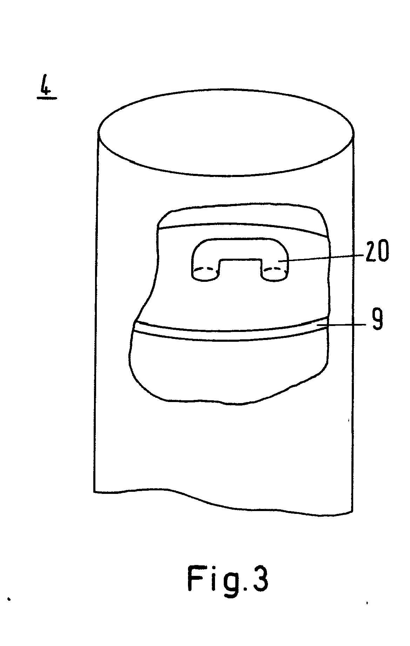

Figur 3 zeigt die Anordnung eines Überlaufrohres 20, welches U-förmig aufgestaltet ist und auf dem Trennboden 9 angeordnet ist. dabei sind die Öffnungen im Trennboden so platziert, dass mit diesem Überlaufrohr ein strömungstechnischer Kurzschluss zwischen der Beruhigungskammer 10 und der Ventilkammer 7 geschaffen ist. Steigt das Wasser bei einem Überlastfall durch hohe Mengen von Regenwasser in den unteren Kammer an, so findet eine Überströmung der Absetz- und Filterkammern statt, weil dann der schnellstmögliche Ablauf zur Vermeidung einer Überschwemmung den Vorrang gegenüber einer Filterung hat.

Das Verhindern, dass Leichtflüssigkeit durch die Auslasskammer gelangt , verhindert nach wie vor der Schwimmer in der Ventilkammer.

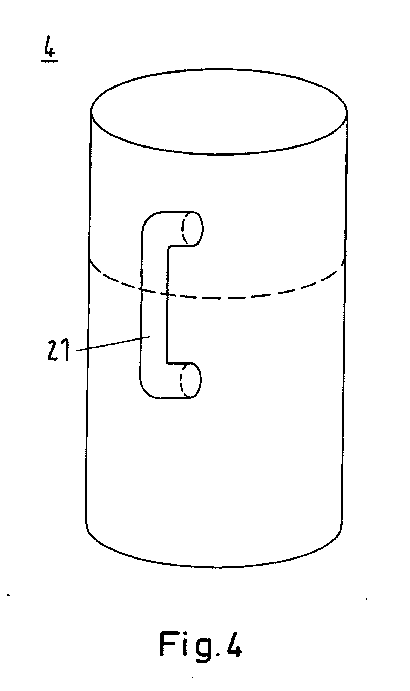

Figur 4 zeigt eine andere Alternative, bei welchem das Überlaufrohr 21 zwischen der obersten, also der Einlaßkammer 5 und der Ventilkammer 7 angelegt ist. Die Funktion ist ebenso die Überströmung aller übrigen Kammern zur Herstellung eines strömungstechnischen Kurzschlusses im Überlastfall.

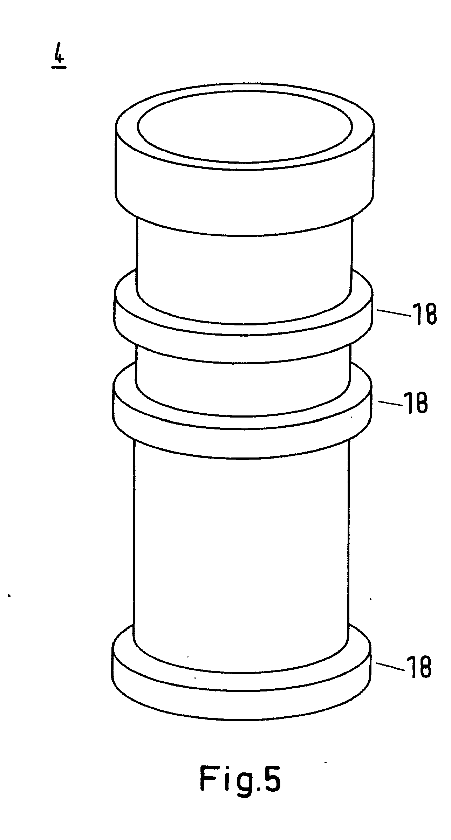

Figur 5 zeigt ringförmige Anformungen 18 am Außengehäuse 4 des Straßeneinlaufes. Die mittleren Anformungen dienen einfach der Verhinderung eines auftriebsbedingten Herausreißens des Straßenlaufes aus dem Boden, wenn bspw viel Wasser von außen ansteht.

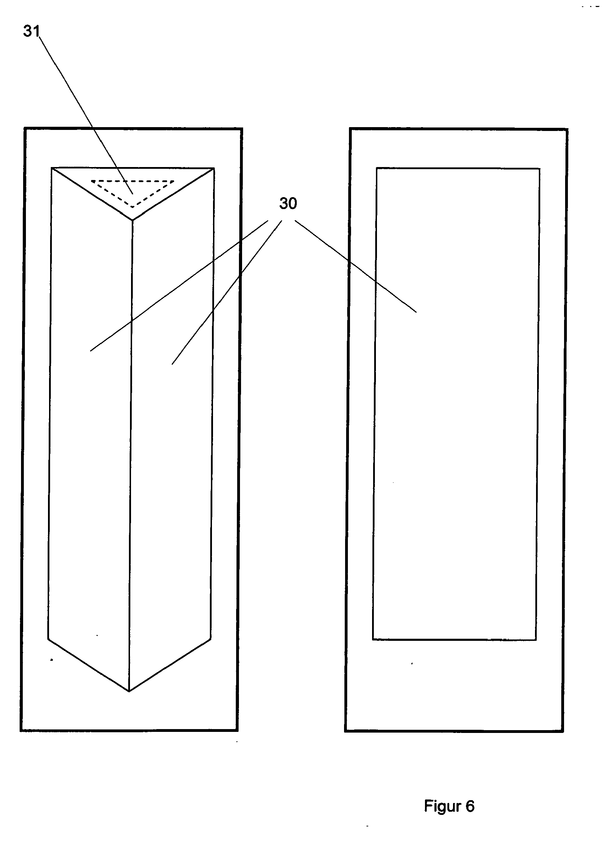

Der obere verdickte Rand ist eine materialverdickte Anformung an ein Kunststoff gefertigten Gehäuses und wirkt als sogenanntes Opfermaterial, welches anschmilzt, wenn bei Bau und Installation des Straßeneinlaufes, von außen flüssiger Teer angegossen wird. Das Opfermaterial verhindert dabei ein Durchschmilzen des oberen Randes. Figur 6 zeigt eine weitere Ausgestaltung zur Darstellung von Figur 2. So kann der Filterkorb 17 zumindest an einer der beiden Ausflächen, durch die das Wasser zwecks Filterung hindurchtritt so ausgebaucht sein, dass sich eine spitz zulaufenden teilpyramidale Struktur ergibt, wie dies in Figur 6 deutlich wird.

Dabei ist die Vorderseite, die in die in Figur 2 dargestellte Teilkammer hineinragt in dieser Weise ausgebildet. Die Rückseite dazu hingegen in wieder flach.

Hierbei wird der pyramidale Filterkörper zusätzlich von von drei Gewebefilterflächen begrenzt. Das heisst die Rückseite, so wie die Außenseiten der beiden die pyramidale Struktur bildenden Fläche sind bspw Gewebefilterflächen. Damit ergibt sich des weiteren eine Art integriert 2-stufige Filterung.

Die erste Vorfilterung erfolgt über die als Gewebefilter ausgestaltbare Rückfläche und eine weitere Filterung durch die beiden anderen Seiten des Filterkörpers. Im Inneren wird noch ein Filtervolumen gebildet, welches mit Filtergranulat füllbar ist.

Auf diese Weise wird erreicht, dass ein größeres Volumen zur Aufnahme von Filtergranulat oder biologiosch aktivem Filtermaterial erreicht wird. Das größeres Volumen muss dabei jedoch zusätzlich strömungsbegünstigt werden. So bietet diese spezielle Gestaltung ein größeres Filtergranulatvolumen bei gleichzeitig guter Durchströmung. Eine zusätzliche Filterung erfolgt über die Außenflächen, die als Gewebefilter ausgestaltet sind.

**Bezugszeichen**
- 1: Straßeneinlauf (Gully)
- 2: Abdeckgitter
- 3: Laubfang
- 4: Gehäuse
- 5: Einlaßkammer
- 6: Auslaßkammer
- 7: Ventilkammer
- 8: Rohr
- 9: Trennboden
- 10: Beruhigungskammer
- 11: Absetzkammer
- 12: Absetzkammer
- 13: Schwallwand
- 14: Gitter und Wabenstruktur/Schlammfangtaschen
- 15: Feinfilter
- 16: Grobfilter
- 17: Filterkorb
- 18: Ringförmige Anformungen
- 20: Überlaufrohr
- 21: Überlaufrohr
- 30: Gewebefilter
- 31: Filtervolumen für Granulat

## Patentansprüche

1. Straßeneinlauf (Gully/Sinkkasten) mit einer oberen Einlaßkammer und einer davon über einen Einlaßkammerboden getrennte untere Auslaßkammer, wobei die Auslaßöffnung der Einlaßkammer durch ein Rohr oder ein Siphon deutlich oberhalb des Einlaßkammerbodens liegt, sowie eine mit einem Schwimmkörper verschließbare Auslaßleitung in der Auslaßkammer,
**dadurch gekennzeichnet,**
**dass** die Auslaßkammer in mehrere vertikal geteilte Unterkammern (7, 10, 11, 12) geteilt, von welchen zwei Kammern (11, 12) über eine Trennwand geteilt als erste und zweite Absetzkammer dienen, und die Trennwand mit einem Aktivkohle oder Filtergranulat/- Substrat oder bioaktiviertem Trägermaterial gefüllten Filterkorb versehen ist, oder eine der Absetz- oder Unterkammern insgesamt mit einem bioaktivierten oder filterfähigen Trägermaterial gefüllt ist.

2. Straßeneinlauf nach Anspruch 1,
**dadurch gekennzeichnet,**
**dass** die Trennwände zwischen den Unterkammern (7, 10, 11, 12) mit jeweils einer flüssigkeitsdurchlässigen Schlitzung versehen sind, und dass dort wo der Filterkorb angeordnet ist, die Schlitzung durch den flüssigkeitsdurchgängigen Filterkorb ersetzt ist.

3. Straßeneinlauf nach Anspruch 1,
**dadurch gekennzeichnet,**
**dass** in mindestens eine der Unterkammern ein nahezu raumfüllender entnehmbarer Filterkorb vorgesehen ist, in welchem das Filtermaterial angeordnet ist.

4. Straßeneinlauf nach Anspruch 1, 2 oder 3,
**dadurch gekennzeichnet,**
**dass** die Trennwand mit dem integrierten Filterkorb von oben entnehmbar ist, zwecks Wechsel des Filtermaterials.

5. Straßeneinlauf nach einem der vorhergehenden Ansprüche,
**dadurch gekennzeichnet,**
**dass** die Schlitzung als integrierter Grobfilter strukturiert ist.

6. Straßeneinlauf nach einem der vorhergehenden Ansprüche,
**dadurch gekennzeichnet,**
**dass** die Absetzkammern bodenseitig mit einer Gitteroder Wabenstruktur als Schlammfangtaschen ausgebildet sind, und diese mit bioaktiviertem Trägermaterial gefüllt sind.

7. Straßeneinlauf nach einem der vorhergehenden Ansprüche,
**dadurch gekennzeichnet,**
**dass** zwischen Beruhigungskammer (10) und Ventilkammer (7) ein Überlaufrohr (20) angeordnet

8. Straßeneinlauf nach Anspruch 7,
**dadurch gekennzeichnet,**
**dass** das Überlaufrohr (20) als U-förmig verlaufendes Rohr ausgebildet ist und so auf dem Trennboden (9) angeordnet ist, dass eine Öffnung des Überlaufrohres (20) in die Beruhigungskammer (10) und die andere Öffnung in die Ventilkammer (7) jeweils von oben einmündet.

9. Straßeneinlauf nach einem der vorhergehenden Ansprüche,
**dadurch gekennzeichnet,**
**dass** zwischen Einlaßkammer (5) und Ventilkammer (7) ein Überlaufrohr (21) angeordnet ist.

10. Straßeneinlauf nach einem der vorhergehenden
Ansprüche,
**dadurch gekennzeichnet,**
**dass** die Überlaufrohre (20, 21) unverschlossene Rohre sind.

11. Straßeneinlauf nach einem der vorhergehenden
Ansprüche,
**dadurch gekennzeichnet,**
**dass** die Überlaufrohre (20, 21) mit Stopfen verschlossen sind.

12. Straßeneinlauf nach einem der vorhergehenden
Ansprüche,
**dadurch gekennzeichnet,**
**dass** der Straßeneinlauf am Gehäuse außen mit angeformeten Ringelementen versehen ist, um einem

13. Straßeneinlauf nach einem der vorhergehenden
Ansprüche,
**dadurch gekennzeichnet,**
**dass** am oberen Rand des Gehäuses eine Materialverdickung angeformt ist, als sogenanntes Opfermaterial für die Einfassung des Straßeneinlaufes in flüssigen heissen Straßenteer.

14. Straßeneinlauf nach einer der vorhergehenden. Anprüche,
**dadurch gekennzeichnet,**
**dass** der Filterkorb (17) als Teilpyramidaler oder prismatischer Körper ausgestaltet ist, dessen Ausflächen aus Filterplatten oder Gewebefilterplatten (30) gebildet ist und innen eine Holraum (31) bilden, derart die Filterplatten (30) einen integrierten Vorfilter bilden und der mit Filtergranulat auswechselbar gefüllten Hohlraum einen weiteren integrierten Filter bilden.

15. Straßeneinlauf nach Anspruch 14,
**dadurch gekennzeichnet,**
**dass** zum Zweck des Auswechselns des Filtergranulates an den Stirnseiten öffenbare Deckel angeordnet sind.
